# EUROPÄISCHE PATENTANMELDUNG

(11) **EP 2 425 725 A1**
(43) Veröffentlichungstag der Anmeldung: **07.03.2012**
(21) Anmeldenummer: 11405315.0
(22) Anmeldetag: 07.09.2011
(51) Int. Cl.: A23N 12/02, B08B 3/10

(54) **Apparat zum Waschen und/oder Abspülen von unverpacktem Gemüse oder Obst**

(30) Priorität: 07.09.2010 CH 14422010
(71) Anmelder: Carrera Gianni, Michele, 24040 Arcene (BG) (IT)
(72) Erfinder: Pasquale, Damiani, 26020 Agnadello (CR) (IT)
(74) Vertreter: Gaggini, Carlo

(57) **Zusammenfassung**

Die vorliegende Erfindung betrifft eine Vorrichtung zum Waschen und/oder Abspülen von Gemüse, Obst und generell Landwirtschaftsprodukte, mit einem zylindrischen Mantel (1) mit Zufuhrtrichter (4) für das Produkt, ein Wasser-Rührwerk (6), Zufuhr von Wasser, das mittels einer ringförmigen Luftzufuhrleitung (8) zum Brodeln gebracht wird, und ein Auffangbehälter (13) für das Wasser, das gefiltert und wiederverwendet wird.

Die erfindungsgemässe Vorrichtung bietet den Vorteil, im Vergleich zu den gemäss dem Stand der Technik bekannten langen Becken für die gleiche Funktion, dass sie einen viel kleineren Platzbedarf, minimalen Wasserverbrauch, schonende Behandlung des Produkts, grössere Flexibilität in der Anwendung und erleichterten Unterhalt erreicht. Die Vorrichtung eignet sich zur Realisierung von Behandlungsanlagen für Blattgemüse (beispielsweise Salat), Knollengemüse sowie Obst auch für Erzeugerbetriebe kleiner und mittlerer Produktionskapazität.

## Beschreibung

Die vorliegende Erfindung betrifft eine Vorrichtung zum Waschen und/oder Abspülen von unverpacktem Gemüse oder Obst gemäss dem Oberbegriff des Patentanspruchs 1.

Die Vermarktung von Obst, Gemüse, Gartengemüse, usw., mittels modernsten Verteilsystemen umfasst das Verpacken solcher Produkte in gebrauchsbereiten Verpackungen. Ein klassisches Beispiel solcher Produkte ist Blattsalat, wie er in Packungen, die nur eine Sorte Salat oder auch Mischungen verschiedener Salatsorten enthalten, in Läden von Grossverteilern angeboten wird. Dieses System mit Aufbewahrung der Lebensmittel in vorbereiteten Tüten oder Taschen verbreitet sich immer mehr, und betrifft bereits ein breites Sortiment von Gemüsearten, Gartenprodukten und Obst.

Bezüglich der Qualität der Aufbewahrung der Produkte in Taschen bzw. Verpackungen ist darauf die längstmögliche Lagerdauer (Verkaufsfrist, shelf life) des verpackten Produkts anzugeben, d.h. die Anzahl Tage, während denen solche Produkte verkauft werden können. Diese Lagerdauer ist für den Händler offensichtlich von grösster Bedeutung, weil nach Ablauf dieser Frist das Produkt eliminiert wird. Wesentlich bei der Bestimmung der längstmöglichen Lagerdauer des verpackten Produktes ist die Wassermenge, die im Moment des Einpackens im Produkt vorhanden ist, also die Wassermenge, die nach dem Waschprozess und dem Trocknen auf der Oberfläche des Produkts verbleibt. Diese Operation während des Verpackens des Produkts, die erforderlich ist, um ausser der genannten Lagerfähigkeit des Produkts seine unabdingbare organoleptische und hygienische Qualität sicherzustellen, wird mittels geeigneter Vorbereitungslinien realisiert, die Vorrichtungen zum Waschen und/oder Abspülen, Vorrichtungen zum Trocknen und Verpackungseinrichtungen umfassen. Dabei handelt es sich um recht komplexe Bearbeitungslinien, die hauptsächlich für die grossen Gemüse-Intensivkulturen entwickelt wurden, die sich jedoch für kleine und mittelgrosse Produktionsfirmen schlecht eignen, sei es in preislicher Hinsicht oder bezüglich Produktionskapazität.

Die vorliegende Erfindung betrifft nur ein Element in einer solchen Produktionslinie, nämlich die Vorrichtung zum Waschen und/oder Abspülen des unverpackten Produkts, und soll eine solche Vorrichtung vorschlagen, die sich dank ihren Eigenschaften hinsichtlich Platzbedarf, Produktivität und Kosten auch für kleine und mittlere Anlagen eignet, um den Ansprüchen von Produzenten von Gemüse, Gartenprodukten oder Obst mit begrenzter Betriebsgrösse zu genügen, wie sie weltweit in grosser Zahl tätig sind.

Hier sei unterstrichen dass die Begriffe "Waschen" und "Abspülen" sehr ähnlich sind in dem Sinne dass beide im Allgemeinen unter Verwendung der gleichen Vorrichtungen ausgeführt werden können. Anders ausgedrückt, kann die Vorrichtung zum Waschen des Produkts (also zum Ablösen der Unreinigkeiten oder auf der Oberfläche des Produkts mitgeschleppte Verschmutzungen) auch zum Abspülen des Produkts nach dem Waschen dienen, denn Abspülen bedeutet nichts anderes als das Entfernen der Reste der Waschflüssigkeit vom Produkt nach der vorhergehenden Operation. Ferner hat die Praxis gezeigt, dass die beiden Operationen, Waschen und Abspülen, in einem einzigen Arbeitsgang kombiniert werden können, wenn kleine Anpassungen an der Vorrichtung zum Waschen des Produkts vorgenommen werden.

Gemäss dem Stand der Technik sind Vorrichtungen zum Waschen des Produkts bekannt, die mit langgestreckten rechteckigen Becken von vier Meter Länge oder mehr (oft bis 6 Meter Länge) ausgebildet sind, in welchen das zu waschende Produkt (beispielsweise Salatblätter oder andere für das Einpacken vorbereitete Gartenerzeugnisse) wegen ihres stets unter eins liegenden spezifischen Gewichts auf der Wasseroberfläche schwimmen und längs dieses Weges mittels Luftstrahlen geschüttelt werden, die ein Brodeln (unter Bildung von Luftbläschen) hervorrufen, das die Verunreinigungen von den Oberflächen des Produkts ablösen soll.

Der Nachteil dieser aus der Praxis bekannten Vorrichtung zum Waschen liegt darin, dass sie nebst dem grossen Platzbedarf konstruktiv kompliziert ist, weil sie mit einer Vielzahl von Einrichtungen zum Entfernen der auf dem Grund des Kanals anfallenden Verunreinigungen ausgerüstet sein muss, was hohe Fabrikations- und Unterhaltskosten mit sich bringt und die Vorrichtung zum Realisieren von Einheiten kleiner und mittlerer Produktionskapazität ungeeignet macht. Darüber hinaus ist die Effizienz des Waschprozesses recht bescheiden, da das Produkt bloss auf der Oberfläche eines relativ ruhigen Wasserstroms schaukelt, und gerade diese bescheidene Wirksamkeit bedingt die Verlängerung der Abmessungen.

Ziel der vorliegenden Erfindung ist, die genannten Nachteile gemäss dem Stand der Technik zu überwinden, und eine Vorrichtung zu Waschen und/oder Abspülen unverpackter bzw. zum Einpacken bereiter Produkte vorzuschlagen, mit geringem Platzbedarf, jedoch mit grosser Wirksamkeit der Behandlung, ohne die Unversehrtheit des Produkts zu gefährden, zu mässigem Preis und mit leicht auszuführendem Unterhalt, wobei die Vorrichtung am Ende jeder Arbeitsperiode leicht zu reinigen sein soll, um alle angefallenen Verunreinigungen (Erde, Keime, Produktreste, usw.) zu entfernen, die sich gesammelt haben könnten.

Dieses Ziel wird erreicht mit einer Vorrichtung zum Waschen und/oder Abspülen von Produkten wie Gemüse und/oder Obst, mit den Eigenschaften gemäss dem kennzeichnenden Teil des Patentanspruchs 1.

Die Ansprüche 2 bis 9 betreffen sodann weitere Verbesserungen des Erfindungsgegenstandes, deren Vorteile in der folgenden Beschreibung genauer erläutert werden.

Die vorliegende Erfindung wird unter Bezugnahme auf ein Ausführungsbeispiel mit entsprechenden Abbildungen genauer beschrieben. Diese zeigen in der:
- Fig. 1: die erfindungsgemässe Vorrichtung in ihrer einfachsten Ausführungs-form in schematischer Seitenansicht,
- Fig.2: die Vorrichtung gemäss der Fig. 1 im schematisch dargestellten Grund-riss,
- Fig. 3: eine Variante der Vorrichtung gemäss der Fig. 1 in schematischer Sei-tenansicht, bei welcher jedoch ein Element beigefügt ist, das zur Be-handlung mancher sehr loser Gemüseformen (Salate) nützlich sein kann.

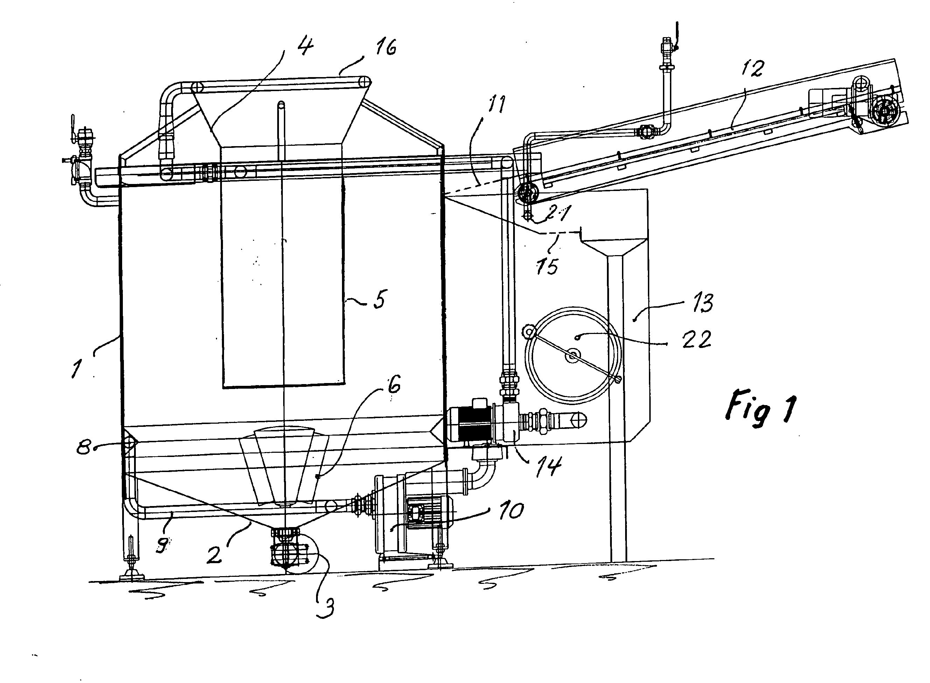

In der Fig. 1 ist ein vertikaler Mantel mit 1 bezeichnet, der mit einem nach unten konisch ausgebildeten Boden 2 versehen ist, der als Sammelbehälter für die beim Waschen und/oder Abspülen vom Produkt abgetrennten Verunreinigungen dient, wie dies später in der Beschreibung genauer erklärt wird. Mit 3 ist ein System von Ventil und Filter zum diskontinuierlichen Entleeren der angesammelten Verunreinigungen aus dem konischen Boden 2 bezeichnet. Mit 4 ist ein Zufuhrtrichter für das Produkt bezeichnet, der sich nach unten in einem zylindrischen Rohr 5 bis in den unteren Teil des Mantels 1 fortsetzt. Der Zufuhrtrichter 4 ist im oberen Bereich des Mantels 1 angeordnet, und das zu waschende und/oder abzuspülende Produkt wird durch den Zufuhrtrichter 4 in den Mantel eingeführt (auf beliebige Art und Weise, was nicht Gegenstand der vorliegenden Erfindung ist, beispielsweise mittels eines Transporttrichters, eines Transportbandes, usw.).das zylindrische Rohr 5 ist unten offen. Im Mantel 1, genauer gesagt in seinem unteren Teil ist sodann ein Wasser-Rührwerk 6 koaxial mit dem Mantel 1 unter der Öffnung 7 des zylindrischen Rohrs 5 angeordnet.

Das Rührwerk 6 kann um seine Vertikalachse rotieren, je nach Bedarf kontinuierlich oder diskontinuierlich, angetrieben von einem Antriebsmotor (nicht dargestellt), der allenfalls im Rührwerk 6 selbst eingebaut ist. Dieses Rührwerk 6 hat die Aufgabe im Wasser, das im Mantel 1 vorhanden ist, und in dem das zu waschende und/oder abzuspülende Produkt schwimmt, eine aufsteigende Strömung zu erzeugen, welche das Aufschwemmen des Produkts (das ja immer leichter ist als Wasser) nach oben zu erleichtern. Je nach den Eigenheiten des Produktes (Blattsalat, Karottenscheiben oder ganze Früchte, usw.) ist dabei die Betriebsweise des Rührwerks passend einzustellen, wobei immer darauf zu achten ist, dass einerseits die gewünschte Intensität des Waschvorgangs, aber anderseits auch die erforderliche Schonung des Produkts, das nicht durch zu intensive Behandlung beschädigt werden darf, erreicht werden.

Ein weiteres wichtiges Element der erfindungsgemässen Vorrichtung ist sodann eine Luftzufuhrleitung 8, die ringförmig längs dem inneren Teil des Mantels 1 im Bereich des Rührwerks 6 angeordnet ist. Die ringförmige Luftzufuhrleitung 8, die via eine Luftzufuhrleitung 9 mit Luft versorgt wird, welche die Luftzuleitung 8 mit einem Ventilator mit Motor 10 verbindet, weist längs ihrer ganzen Länge Öffnungen auf (nicht gezeigt) aus welchen Luftstrahlen, welche ein Brodeln bzw. die Bildung von Luftbläschen verursachen, die sich auf den Oberflächen des zu behandelnden Produkt festsetzen und damit das Abtrennen der Verunreinigungen vom Produkt fördern. Auch unterstützen diese Bläschen nach dem Waschen oder Abspülen den Transport des Produkts nach oben, also zum Ausgang aus dem Mantel 1 hin.

Die erfindungsgemässe Vorrichtung umfasst des Weiteren eine im oberen Bereich des Mantels 1 angeordnete gelochte Platte 11 als Ausgang für das Produkt. Der Mantel 1 ist bis auf das Niveau der gelochten Platte 11 mit Wasser gefüllt und das auf der Höhe der gelochten Platte 11 überlaufende Wasser zieht das Produkt mit und legt es auf dem Transportband 12 ab. Dies bewirkt eine sehr sorgfältige Übergabe des Produktes, die so gewählt wurde, dass die Eigenschaften des Produkts nicht beeinträchtigt werden.

Eine andere wichtige Eigenschaft der erfindungsgemässen Vorrichtung ist sodann, dass mit wiederaufbereitetem Wasser gearbeitet wird, wodurch während des Betriebs der Vorrichtung der Verbrauch von Frischwasser auf ein Minimum reduziert wird, nämlich auf den Ersatz des vom gewaschenen Produkt mitgenommenen Wassers.

Zu diesem Zweck ist ein Auffangbehälter 13 vorgesehen für das Waschwasser und die vom Produkt entfernten Verunreinigungen sowie allfällige Reste des Produkts bzw. jene Bruchstücke des Produkts, die durch die Löcher der gelochten Platte 11 austreten und sich im Auffangbehälter 13 sammeln. Der erforderliche Wiederverwendungs-Kreislauf des Wassers umfasst eine Umwälzpumpe 14, eine Wasserfilteranordnung 15, welche die Verunreinigungen und Reste des Produkts abtrennt, und eine Leitungsanordnung zur Rückführung des wiederaufbereiteten Wassers 16 in den oberen Teil des Zufuhrtrichters 4. Die Rückführungsleitung für das wiederaufbereitete Wasser 16 ist kreisringförmig ausgelegt und bringt das Wasser via geeignete Öffnungen auf die ganze innere Oberfläche des Zufuhrtrichters 4 und des zylindrischen Rohrs 5 aus, wodurch das zu waschende und/oder abzuspülende Produkt sanft nach unten befördert wird. Zu beachten ist, mit welcher Sorgfalt bei der Konstruktion der Vorrichtung darauf geachtet wurde, dass möglichst schonende Produkt-Behandlungsvorgänge ausgeführt werden, damit das Produkt frisch und gut präsentabel bleibt.

Die erfindungsgemässe Vorrichtung arbeitet in dem Sinne diskontinuierlich, als von Zeit zu Zeit (beispielsweise am Ende einer Arbeitsschicht) das Wasser zusammen mit den Produktteilen, die sich im unteren konischen Teil 2 des Mantels 1 angesammelt haben, abgelassen wird. Für diese Operation genügt es, das Ablaufventil 3 zu öffnen.

Das Funktionieren der erfindungsgemässen Vorrichtung ist in der obigen Beschreibung klar beschrieben, so dass sich weitere Erläuterungen erübrigen.

Hinsichtlich der alternativen Verwendung der Vorrichtung zum Waschen und/oder Abspülen ist zu bemerken, dass beide Operationen mit der gleichen Vorrichtung ausgeführt werden können, da sie sich lediglich in der Menge der mit dem Produkt eingebrachten Verunreinigungen, und daher in der Intensität der auszuführenden Behandlung unterscheiden; dabei ist zu unterstreichen, dass oft auf der gleichen Behandlungslinie zwei Vorrichtungen wie die oben beschriebene vorgesehen werden, wobei die erste das Waschen und die zweite, genau gleich ausgebildete das Abspülen besorgt.

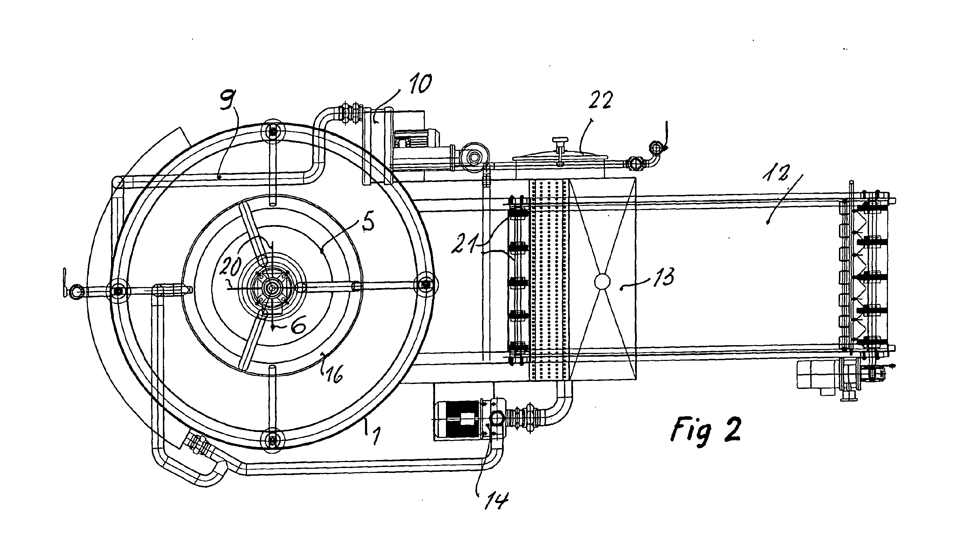

Die Vorrichtung gemäss der Fig. 1 ist zum besseren Verständnis in der Fig. 2 auch im Grundriss gezeigt, wobei auch diese Darstellung schematisch und daher leicht verständlich ist.

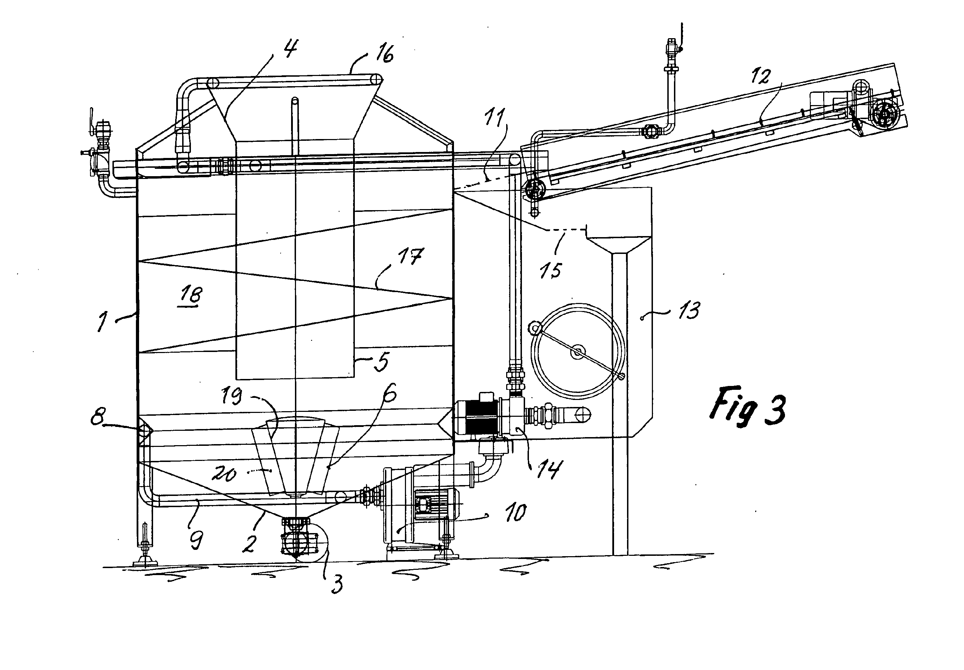

Die erfindungsgemässe Vorrichtung ist sodann in der Fig. 3 in einer ersten Variante dargestellt, die sich von der in der Fig. 1 gezeigten lediglich darin unterscheidet, dass eine Wendel-Hebebahn 17 im ringförmigen Zwischenraum 18 zwischen dem Mantel 1 und dem zylindrischen Rohr 5 des Zufuhrtrichters 4 vorgesehen ist. Die Wendel-Hebebahn 17 ist am zylindrischen Rohr 5 fest angebracht, was wichtig ist, weil sie somit leicht entfernt werden kann, indem sie zusammen mit dem oberen Teil der Vorrichtung (nämlich der Zufuhrtrichter 4 und die abnehmbare Leitung 16) hochgehoben werden kann, damit das Innere des Mantels 1 gereinigt werden kann.

Der Zweck der Wendel-Hebebahn 17 ist, das Aufsteigen des Produkts zusätzlich (über das Brodeln der Luft aus der Leitung 8 hinaus) zu unterstützen. Das Produkt wird somit von den brodelnden Strahlen aus der Leitung 8 schraubenlinienförmig auf der Wendelbahn geschoben und steigt langsam auf. Die Verwendung einer solchen Wendel-Hebebahn 17 ist insbesondere angezeigt, wenn das Produkt infolge seiner Gewichts-Eigenschaften, usw., dazu neigt, zu schnell zur Oberfläche aufzusteigen: es handelt sich also um ein bremsendes Element das insbesondere beim Behandeln von Salaten und ähnliche Produkten nötig ist.

Gemäss einer anderen bevorzugten Ausführungsform der Erfindung, ist vorgesehen, dass das Wasser-Rührwerk 6 als nach unten konisch zulaufender Zentralkörper 19 ausgebildet ist, auf dessen Aussenwand Flügel 20 (in den Figuren 1 und 2 sind es 4 Flügel) angebracht sind, welche das im Mantel 1 befindliche Wasser in Rotation versetzen und es nach oben lenken. Die Erfahrung hat gezeigt, dass diese Form des Wasser-Rührwerks für die vorgesehene Verwendung ideal geeignet ist, weil damit eine wirksame, aber absolut sanfte Waschbehandlung des Produktes erreicht wird.

Eine weitere bevorzugte Ausführungsform der vorliegenden Erfindung, ebenfalls in den Figuren 1 und 2 dargestellt, sieht sodann vor, dass die Vorrichtung zum Waschen auch eine zusätzliche Einrichtung zum Abspülen, beziehungsweise zum Ausführen eines Vor-Abspülprozesses aufweist.

Eine solche Einrichtung besteht darin, dass über der gelochten Platte 11, die vor dem Transport- oder Ausgangsband 12 angeordnet ist, eine Reihe von Abspüldüsen 21 angebracht ist, die Abspülwasser auf das Produkt sprühen.

Gemäss einer weiteren Verbesserung der erfindungsgemässen Vorrichtung ist vorgesehen, dass der Auffangbehälter 13 mit einer Inspektionsfenster 22 versehen ist, das erlaubt, das Innere des Behälters zu kontrollieren. Dies ist auch sehr bequem, um die Qualität des wiederaufbereiteten Wassers zu kontrollieren und die Intervalle für das Entleeren des Wassers entsprechend den im Wasser vom Produkt abgeführten Verunreinigungen festzulegen.

Die Vorrichtung zum Waschen und/oder Abspülen gemäss der vorliegenden Erfindung muss auch den präzisen Hygiene-Vorschriften genügen, nämlich dass sie leicht zu reinigen ist und auch aus entsprechend geeignetem Material hergestellt ist.

Gemäss einer ersten Variante der Ausführungsform ist in diesem Sinne vorgesehen, dass der zylindrische Mantel 1, das Wasser-Rührwerk 6, der Zufuhrtrichter 4 mit dem zylindrischen Rohr 5 und die gelochte Platte 11 (welche die Rolle eines Abstreifers übernimmt) aus einem für die Lebensmittelindustrie tauglichen Material hergestellt sind, wie beispielsweise aus einem für solche Anwendungen zugelassenen rostfreiem Stahl oder aus einem Kunststoffmaterial, das für Lebensmittelbetriebe zugelassen ist. Solche Materialien sind Gegenstand internationaler Normen und lassen sich in allen einschlägigen Katalogen finden, so dass hierzu keine weiteren Erläuterungen erforderlich sind.

Zum Erleichtern der Reinigungs- und Unterhaltsarbeiten an der erfindungsgemässen Vorrichtung, insbesondere zum Entfernen jeder Spur eines Produkts aus dem Innern des Mantels 1 wenn das Sortiment in Bearbeitung ändert, usw., ist sodann vorgesehen, dass gemäss einer weiteren erfinderischen Verbesserung der Zufuhrtrichter 4 und die allenfalls daran befestigte Wendel-Hebebahn 17 leicht aus dem Mantel 1 nach oben herausgezogen werden können, zusammen mit der Leitungsanordnung 16, so dass das Innere des Mantels 1 freigelegt und das Wasser-Rührwerk 6 und die Luftzuleitung 8 zugänglich werden.

Die Vorrichtung zum Waschen und Abspülen von Gemüse, usw., gemäss der vorliegenden Erfindung erweist sich über die bereits in der Einleitung genannten Vorteile - darunter der geringe Platzbedarf, der geringe Wasserverbrauch und die schonende Behandlung des Produkts- hinaus als ausserordentlich vielseitig einsetzbar, da sie mit geeigneten Einstellungen und Anpassungen - mit oder ohne die Wendel-Hebebahn 17, Einstellung der Geschwindigkeit und des Rhythmus der Drehung des Wasserrührwerks 6, der Intensität der durch die Luftleitung 8 eingeblasene Luftströmung -das Behandeln von untereinander sehr verschiedenen Landwirtschaftsprodukten erlaubt, von Salatblättern über Wurzelknollen bis zu Obst. Dies alles ergibt eine Vorrichtung, die sich ideal in eine Produktionslinie für kleine bis mittelgrosse Bearbeitungsbetriebe einfügt.

### Liste der in den Figuren verwendeten Bezugsziffern

- 1: zylindrischer Mantel
- 2: konischer Boden
- 3: Ventil- und Filteranordnung
- 4: Zufuhrtrichter
- 5: zylindrisches Rohr
- 6: Wasser-Rührwerk
- 7: Öffnung des zylindrischen Rohrs 5
- 8: Luftzufuhrleitung
- 9: Zufuhrleitung
- 10: Ventilator mit Antriebsmotor
- 11: gelochte Platte
- 12: Transportband für den Abtransport
- 13: Auffangbehälter für das Wasser
- 14: Umwälzpumpe
- 15: Filtriereinrichtung
- 16: Rückführleitung für das wiederaufbereitete Wasser
- 17: Hebe-Wendelbahn
- 18: ringförmiger Zwischenraum
- 19: konisch ausgebildeter zentraler Körper
- 20: Flügel
- 21: Sprühdüse
- 22: Inspektionsfenster

## Patentansprüche

1. Vorrichtung zum Waschen und/oder Abspülen eines Produkts in Form von unverpacktem Gemüse und/oder Obst, **dadurch gekennzeichnet, dass** sie die folgenden Elemente umfasst:
- einen im Wesentlichen zylindrischen, vertikal angeordneten Mantel (1) mit einem konisch ausgebildeten, nach unten gerichteten Boden (2) als Sammelbehälter für die vom zu behandelnden Produkt abgelösten Verunreinigungen,
- einen Zufuhrtrichter (4) für das Produkt, der im oberen Teil des Mantels (1) angebracht ist, und der sich im Innern des Mantels (1) in einem zylindrischen Rohr (5) bis in seinen unteren Teil fortsetzt und unten offen ist,
- ein Wasser-Rührwerk (6), das den Mantel (1) füllt, im unteren Teil des Mantels (1) koaxial mit diesem angebracht ist, unterhalb der Öffnung (7) des Rohrs (5) des Zuführtrichters (4), das mittels eines Antriebsmotors kontinuierlich oder diskontinuierlich um seine Achse in Rotation versetzt werden kann,
- eine Luftzuleitung (8), die ringförmig längs der inneren Wand des Mantels (1) im Bereich des Wasser-Rührwerks (6) angeordnet ist und über ihre ganze Länge mit Öffnungen versehen ist, um einen Brodel-Effekt zu erzeugen, der geeignet ist, Verunreinigungen von der Oberfläche des Produkts abzulösen,
eine nach oben geneigte gelochte Platte (11) zum Abtropfen des Produkts im oberen Bereich des Mantels (1), nach welchem ein Transportband (12) zum Abtransport des Produkts angeordnet ist,
- ein Sammelbehälter (13) für das Wasser und die vom Produkt abgelösten Verunreinigungen und allfällige Abfälle des Produkts selbst,
- ein Wiederverwendungs-Kreislauf des Wassers, der eine Umwälzpumpe (14), eine Filteranordnung (15) für das Wasser zum Abtrennen der Verunreinigungen und Produktabfälle sowie eine Leitungsanordnung zur Rückführung des wiederverwendeten Wassers im oberen Teil des Zufuhrtrichters (4) für das Produkt.

2. Vorrichtung zum Waschen und/oder Abspülen gemäss dem Patentanspruch 1,
**dadurch gekennzeichnet, dass**
im ringförmigen Zwischenraum (18) zwischen dem Mantel (1) und dem zylindrischen Rohr (5) des Zufuhrtrichters (4) eine Wendel-Hebebahn (17) für das Produkt angeordnet ist.

3. Vorrichtung zum Waschen und/oder Abspülen gemäss dem Patentanspruch 1,
**dadurch gekennzeichnet, dass**
das Wasser-Rührwerk (6) einen nach unten konisch ausgebildeten zentralen Körper (19) bildet, auf dessen Aussenwand Flügel (20) angebracht sind, welche das im Mantel (1) befindliche Wasser in Rotation und eine nach oben gerichtete Wendelströmung versetzen.

4. Vorrichtung zum Waschen und/oder Abspülen gemäss dem Patentanspruch 1,
**dadurch gekennzeichnet, dass**
bei der gelochten Platte (11), die vor dem Ausgangs-Transportband (12) angeordnet ist, eine Reihe von Sprühdüsen (21) angeordnet ist, die Abspülwasser auf das Produkt sprühen.

5. Vorrichtung zum Waschen und/oder Abspülen gemäss dem Patentanspruch 1,
**dadurch gekennzeichnet, dass**
das Auffangbecken (13) mit einem Inspektions-Fenster versehen ist, durch welches sein Innenraum kontrolliert werden kann.

6. Vorrichtung zum Waschen und/oder Abspülen gemäss dem Patentanspruch 1,
**dadurch gekennzeichnet, dass**
der zylindrische Mantel (1), das Wasser-Rührwerk (6), der Zufuhrtrichter (4) mit dem zylindrischen Rohr (5) und die gelochte Platte (11) aus einem für die Lebensmittelindustrie geeigneten Material bestehen.

7. Vorrichtung zum Waschen und/oder Abspülen gemäss dem Patentanspruch 6,
**dadurch gekennzeichnet, dass**
das für die Lebensmittelindustrie geeignete Material ein rostfreier Stahl ist, der für diese Anwendung zugelassenen ist.

8. Vorrichtung zum Waschen und/oder Abspülen gemäss dem Patentanspruch 6,
**dadurch gekennzeichnet, dass**
das für die Lebensmittelindustrie geeignete Material ein Kunststoff ist, der für diese Anwendung zugelassenen ist.

9. Vorrichtung zum Waschen und/oder Abspülen gemäss dem Patentanspruch 6,
**dadurch gekennzeichnet, dass**
der Zufuhrtrichter (4), die Wendel-Hebebahn (17), an der allenfalls die Zuleitung (16) für das wiederaufbereite Wasser befestigt ist, leicht aus dem Mantel (1) nach oben herausgezogen werden können.
